# EUROPÄISCHE PATENTANMELDUNG

(11) **EP 4 498 071 A1**
(43) Veröffentlichungstag der Anmeldung: **29.01.2025**
(21) Anmeldenummer: 24000093.5
(22) Anmeldetag: 18.07.2024
(51) Int. Cl.: G01N 21/89, G01N 21/86

(54) **KAMERASYSTEM ZUR AUFNAHME VON BILDERN EINER SCHNELL BEWEGTEN OBERFLÄCHE**

(30) Priorität: 28.07.2023 DE 102023003095
(71) Anmelder: ZM-Technik GmbH, 89520 Heidenheim (DE)
(72) Erfinder: Cornu, Thelio, 73477 Oberkochen (DE)

(57) **Zusammenfassung**

Kamerasystem (1,1',1") zur Aufnahme von Bildern einer schnell bewegten Oberfläche (30) einer laufenden Materialbahn, insbesondere eines Siebbandes, Filzbandes, Kunststoffbandes, Metallbandes oder einer Textilbahn,
umfassend eine Digitalkamera (2), eine Abstandsverstellung (3,3',3") mit Motor (4), eine Steuerungseinheit (5), eine LED-Blitzvorrichtung (6) und ein geschlossenes Systemgehäuse (10), welches zumindest die Digitalkamera (2) und die Steuerungseinheit (5) umschließt, und welches eine Aufnahmeseite (11) mit einem Fenster (13) aufweist, wobei die LED-Blitzvorrichtung (6) an der Aufnahmeseite (11) seitlich neben dem Fenster (13), hinter dem Fenster (13) oder um das Fenster (13) herum angeordnet ist, so dass die LED-Blitzvorrichtung (6) die aufzunehmende Oberfläche (30) beleuchten kann,
wobei die Digitalkamera (2) im Systemgehäuse derart ausgerichtet ist, dass sie Aufnahmen durch das Fenster (13) hindurch machen kann, und wobei die Digitalkamera (2) derart an der Abstandsverstellung (3,3',3") befestigt ist, dass der Abstand der Digitalkamera (2) zur Oberfläche (30) stufenlos verändert werden kann, um den Fokus einzustellen.

## Beschreibung

Die Erfindung betrifft ein Kamerasystem zur Aufnahme von Bildern einer schnell bewegten Oberfläche, insbesondere eines Siebbandes, Filzbandes, Kunststoffbandes, Metallbandes oder einer Textilbahn, umfassend eine Digitalkamera.

Solche Kamerasysteme sind interessant, um die obengenannten Materialbahnen oder Bänder bei laufender Maschine begutachten zu können, ohne dass die Maschine dazu abgestellt werden muss. Maschinen mit diesen Materialbahnen oder Bändern sind beispielsweise Papiermaschinen mit Formiersieben, Pressfilzen, Transferbändern oder ähnlichem. Die Oberfläche der Materialbahnen oder Bänder bewegt sich mit hoher Geschwindigkeit, so dass normale Kamerasysteme ungeeignet sind. Sie liefern keine scharfen Bilder, um den Zustand der Oberfläche beurteilen zu können. Unter "schnell bewegt" wird in diesem Zusammenhang eine Geschwindigkeit von mindestens 100 m/min verstanden. Meist bewegen sich die zu fotografierenden Oberflächen mit einer Geschwindigkeit von mehreren Hundert m/min, oftmals mit mehr als 1000 m/min, und zum Teil bis 2000 m/min.

Bekannt ist ein Kamerasystem zur Beobachtung von schnell bewegten Oberflächen einer laufenden Papierbahn beispielsweise aus der EP 1984725 A1**.** Hier wird ein Kamerasystem beschrieben, das die Oberfläche einer Papierbahn auf der ganzen Breite überwacht und Fehler erkennen soll. Das System ist dazu gedacht, die Oberfläche kontinuierlich zu überwachen. Nachteilig ist, dass ein solches Kamerasystem kompliziert ist, viele Digitalkameras benötigt und aufwändig installiert werden muss. Für kurzzeitige Kontrollaufnahmen von einer bewegten Oberfläche sind diese Systeme nicht geeignet.

Aufgabe ist es nun, ein Kamerasystem zu entwickeln, das einfacher zu handhaben ist und bei schnell laufenden Materialbahnen zuverlässig scharfe Aufnahmen liefert.

Die Aufgabe wird durch ein Kamerasystem gemäß Anspruch 1 gelöst. Weitere vorteilhafte Merkmale für die erfindungsgemäße Ausführung sind in den abhängigen Ansprüchen angegeben.

Das erfindungsgemäße Kamerasystem zeichnet sich dadurch aus, dass es neben einer Digitalkamera, eine Abstandsverstellung mit Motor, eine Steuerungseinheit, eine LED-Blitzvorrichtung und ein geschlossenes Systemgehäuse umfasst, welches zumindest die Digitalkamera, und die Steuerungseinheit umschließt, und welches eine Aufnahmeseite mit einem Fenster aufweist, wobei die LED-Blitzvorrichtung an der Aufnahmeseite seitlich neben dem Fenster, hinter dem Fenster oder um das Fenster herum angeordnet ist, so dass die LED-Blitzvorrichtung die aufzunehmende Oberfläche beleuchten kann, wobei die Digitalkamera im Systemgehäuse derart ausgerichtet ist, dass sie Aufnahmen durch das Fenster hindurch machen kann, und wobei diese derart an der Abstandsverstellung befestigt ist, dass der Abstand der Digitalkamera zur aufzunehmenden Oberfläche der laufenden Materialbahn stufenlos verändert werden kann, um den Fokus einzustellen.

Mit hinter dem Fenster ist gemeint, dass die LED-Blitzvorrichtung im Systemgehäuse angeordnet ist und durch das Fenster die Oberfläche beleuchtet.

Das Kamerasystem ist einfach gestaltet und kann in festem Abstand zur bewegten Oberfläche gehalten, geführt oder befestigt werden. Über die eingebaute Abstandsverstellung, an der die Digitalkamera befestigt ist, kann der Fokus für scharfe Aufnahmen genau justiert werden. Die Digitalkamera kann dabei direkt an der Abstandsverstellung befestigt sein oder indirekt, zum Beispiel über diverse Zwischenteile, wie etwa eine Kamera-Halterung oder über das Systemgehäuse.

Bevorzugt ist die Abstandsverstellung im Systemgehäuse angeordnet. So ist auch diese gut geschützt vor äußeren Einflüssen wie Spritzwasser oder Schmutz.

Insbesondere kann die Abstandsverstellung so ausgeführt sein, dass der Abstand der Digitalkamera zum Fenster stufenlos verändert werden kann, um den Fokus einzustellen. Das ist besonders einfach auszuführen und das Systemgehäuse schützt alle wichtigen Komponenten.

In einer weiteren bevorzugten Ausführung kann mit Hilfe der Abstandsverstellung die Digitalkamera zusammen mit dem Fenster verschoben werden, um so den Abstand der Digitalkamera zur Oberfläche stufenlos zu verändern. Dazu kann die Digitalkamera zusammen mit dem Fenster an einer Kamera-Halterung befestigt sein.

In noch einer weiteren erfindungsgemäßen Ausführung ist die Digitalkamera über eine Kamera-Halterung im Systemgehäuse befestigt und das Systemgehäuse kann mit Hilfe der Abstandsverstellung relativ zur aufzunehmenden Oberfläche verschoben werden, so dass damit der Abstand der Digitalkamera zur Oberfläche stufenlos verändert werden kann.

Eine besonders bevorzugte Ausführung ist so ausgebildet und dazu vorgesehen, dass das Kamerasystem während der Aufnahmen dauernd in Kontakt mit der schnell bewegten Oberfläche ist. Durch den Kontakt kann der Abstand zwischen dem Kamerasystem und der aufzunehmenden Oberfläche einfacher konstant gehalten werden. Die Einstellung des Fokus mit Hilfe der Abstandsverstellung ist somit genauer. Vor allem wenn das Kamerasystem mit der Hand gehalten werden soll oder wenn die Oberfläche senkrecht zur Hauptbewegungsrichtung ausgelenkt werden kann, bietet diese Ausführung enorme Vorteile. Dazu können an der Aufnahmeseite des Systemgehäuses Auflageelemente vorgesehen sein, welche während der Aufnahme im Kontakt mit der schnell bewegten Oberfläche stehen. Insbesondere können die Auflageelemente so ausgeführt sein, dass sei schneller verschleißen als die bewegte Oberfläche. Je nach Material der Oberfläche, die aufgenommen werden soll, können die Auflageelemente aus einem passenden Material bestehen, so dass diese immer schneller verschleißen als die Oberfläche. Dadurch wird gewährleistet, dass die Oberfläche durch die Auflageelemente nicht beschädigt wird. Gleichzeitig wird das Systemgehäuse ebenfalls vor Verschleiß geschützt. Bevorzugt sind die Auflageelemente als zwei Verschleißbügel ausgebildet, die beispielsweise skiförmig gestaltet sein können.

Weiterhin ist es erfindungsgemäß möglich, dass die Abstandsverstellung so ausgeführt ist, dass sie den Abstand zwischen dem Systemgehäuse und den Auflageelementen stufenlos verändern kann.

Um trotz hoher Relativgeschwindigkeit zwischen der aufzunehmenden Oberfläche und der Kamera gute Bilder machen zu können, ist die LED-Blitzvorrichtung vorhanden. Insbesondere ist die Blitzdauer kürzer als die Belichtungszeit der Digitalkamera. So wird die Oberfläche nur sehr kurzzeitig belichtet und eine Momentaufnahme der bewegten Oberfläche von der Digitalkamera erfasst, auch wenn die Belichtungszeit der Digitalkamera für ein scharfes Bild zu lange ist.

Besonders vorteilhaft ist es, wenn die LED-Blitzvorrichtung so ausgebildet ist, dass sie Blitze erzeugen kann, deren Beleuchtungszeit zwischen 0,5 und 20 Mikrosekunden, insbesondere zwischen 1 und 10 Mikrosekunden liegt.

Die Digitalkamera kann vorzugsweise eine CMOS- oder CCD-Kamera oder eine andere Flächenkamera sein.

Die Abstandsverstellung kann vorzugsweise eine Linearführung oder eine Parallelogramm-Führung sein. Insbesondere ist sie so ausgeführt, dass sie einen Verstellweg für den Abstand der Kamera zur aufzunehmenden Oberfläche zwischen +/- 5 mm und +/-20 mm zulässt.

Der Abstand der Kamera zum Fenster beträgt vorzugsweise zwischen 3 mm und 20 mm.

Das Fenster kann eine Scheibe enthalten oder eine freie Öffnung sein. Insbesondere liegt der Abstand des Fensters zur Oberfläche im Bereich von 5 mm bis 20 mm.

Die Steuerungseinrichtung kann beispielsweise ein sogenannter Ein-Platinen-Computer sein, zum Beispiel ein Raspberry Pi.

Um die empfindlichen Komponenten des Kamerasystems vor Staub, Spritzwasser oder anderen Verschmutzungen zu schützen, sind diese in das Systemgehäuse eingebaut, welches abgeschlossen und abgedichtet ist. Damit das Fenster im Systemgehäuse nicht verschmutzt, sind um das Fenster herum einer oder mehrere Ausblasschlitze vorhanden, aus denen Luft ausgeblasen wird. So wird das Fenster freigehalten. Ein Ventilator ist vorhanden, der so angeordnet und mit den Ausblasschlitzen verbunden ist, dass er Luft zu diesen Ausblasschlitzen fördern kann. In der Wandung des Systemgehäuses können Luftkanäle vorhanden sein, die den Ventilator mit den Ausblasschlitzen verbinden. Die Luftkanäle können in die Wandung des Systemgehäuses integriert sein. Das ist besonders gut herzustellen, wenn das Systemgehäuse oder Teile davon in einem additiven Fertigungsverfahren hergestellt sind, beispielsweise durch sogenanntes Fused-Deposition-Modeling (FDM). Alternativ zu den Luftkanälen können auch Schläuche vorhanden sein.

In einer weiteren vorteilhaften Ausführung sind an der Aufnahmeseite eine Fotodiode und eine Beleuchtungseinheit neben der Fotodiode oder um die Fotodiode herum vorhanden. Zusätzlich ist zwischen der Fotodiode und der LED-Blitzvorrichtung eine Abschirmung vorgesehen. Die Fotodiode ist dabei so verschaltet, dass sie als Trigger eine Bildaufnahme auslösen kann. Die Fotodiode kann das von der Oberfläche reflektierende Licht der Beleuchtungseinheit erfassen, und sobald sich dieses reflektierende Licht signifikant ändert, kann eine Aufnahme ausgelöst, das heißt das Bild gespeichert werden. Eine entsprechende Änderung des reflektierenden Lichts kann beispielsweise durch eine Farbmarkierung verursacht werden. So kann gezielt eine bestimmte Stelle der Oberfläche aufgenommen werden. Interessante Stellen der Oberfläche, die mit einer Farbmarkierung gekennzeichnet werden, können etwa die Nahtbereiche eines endlos gemachten umlaufenden Siebes, Filzbandes oder anderen Gewebes sein. Wird das Kamerasystem nach und nach quer zur Laufrichtung der Oberfläche verschoben und werden jeweils Aufnahmen getriggert von der Farbmarkierung gemacht, so kann der Nahtbereich über der gesamten Breite bei laufender Maschine beurteilt werden.

Es kann von Vorteil sein auch die Fotodiode durch eine Luftspülung vor eindringendem Schmutz zu schützen.

Zusätzlich ist es von Vorteil, wenn das Kamerasystem unabhängig von einer externen Stromversorgung betrieben werden kann. Dazu kann ein Energiespeicher zur unabhängigen Versorgung des Kamerasystems vorhanden sein, insbesondere ein Akku oder eine Batterie, und insbesondere kann der Energiespeicher im Systemgehäuse angeordnet sein, so dass er vor äußeren Einflüssen in der Maschine geschützt ist.

In einer vorteilhaften Ausführung ist eine Haltestange vorgesehen, insbesondere als Halterohr und/oder mehrteilig aufgebaut, mit einer Länge von mindestens 1 m, bevorzugt von mindestens 1,5 m, welche am Systemgehäuse befestigt ist, so dass die Digitalkamera über eine laufende Materialbahn gehalten werden kann. Damit wird es möglich, das Kamerasystem während der Aufnahmen von Hand zu halten und dennoch in sicherem Abstand zur schnell bewegten Oberfläche zu stehen. Die Haltestange ist bevorzugt als GFK- oder CFK-Rohr ausgebildet, so ist sie besonders leicht und stabil.

Weiterhin ist es bevorzugt, eine Fernbedienungseinheit vorzusehen, mit der Funktionen des Kamerasystems über die Steuereinheit angesteuert werden können. Dabei sollten eine oder mehrere der folgenden Komponenten ansteuerbar sein:
- die Digitalkamera, für beispielsweise manuelle Auslösung, Serienaufnahme, Bildhelligkeit, Empfindlichkeit,
- die Abstandsverstellung, um den Fokus einzustellen,
- die LED-Blitzvorrichtung, um beispielsweise Blitzdauer, Blitzabfolge zu beeinflussen,
- der Ventilator, zum Anschalten, Ausschalten, Drehzahl verändern
- die Fotodiode beziehungsweise die Steuerungseinheit, um den Trigger-Level zu verändern. Die Fernbedienungseinheit ist bevorzugt über eine NIR- oder WLAN-Verbindung mit der Steuerungseinheit verbunden.

Weiterhin bevorzugt ist ein Display vorhanden, insbesondere als Touch-Display ausgeführt. Auf dem Display wird das Bild der Digitalkamera direkt angezeigt, so dass der Bediener sieht, was die Kamera sieht und gegebenenfalls eine Aufnahme auslösen und damit speichern kann. Besonders bevorzugt ist das Display separat vom Systemgehäuse angeordnet. So kann der Bediener das Display gut einsehen.

Besonders vorteilhaft ist es, wenn das Display und die Fernbedienungseinheit an dem Ende des Halterohres angeordnet sind, die dem Systemgehäuse gegenüber liegt, insbesondere können Display und Fernbedienungseinheit als eine Einheit ausgeführt sein. So kann der Bediener Display und Fernbedienungseinheit komfortabel nutzen.

Die Erfindung wird nachfolgend anhand von Figuren, die beispielhaft erfindungsgemäße Ausführungen zeigen, näher beschrieben. Die darin gezeigten weiteren Merkmale können nicht nur in der gezeigten Kombination die Erfindung weiter verbessern, sondern auch einzeln in Verbindung mit der Erfindung vorteilhaft umgesetzt werden.
- **Fig.1**: Seitenansicht eines erfindungsgemäßen Kamerasystems
- **Fig.2**: Ansicht der Aufnahmeseite eines erfindungsmäßen Kamerasystem
- **Fig.3**: Erfindungsgemäße Ausführung eines Kamerasystem
- **Fig.4**: Seitenansicht eines weiteren erfindungsgemäßen Kamerasystems
- **Fig.5**: Seitenansicht noch eines weitern erfindungsgemäßen Kamerasystems

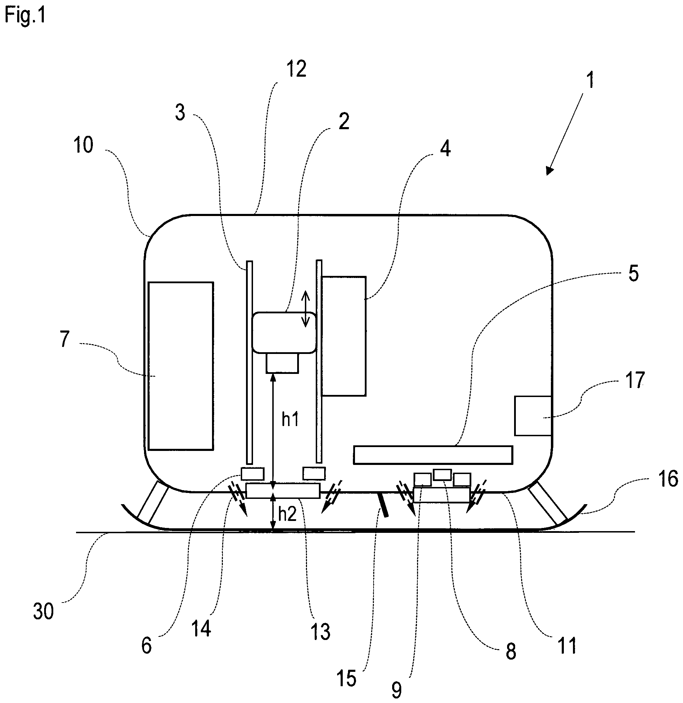

In **Fig.1** ist das Kamerasystem 1 von der Seite aufgeschnitten zu sehen. Im Systemgehäuse 10, welches auf der Aufnahmeseite 11 das Fenster 13 aufweist, ist die Digitalkamera 2 an der Abstandsverstellung 3 befestigt. Mit Hilfe des Motors 4 an der Abstandsverstellung 3 kann die Digitalkamera 2 im Abstand h1 zum Fenster 13 verstellt werden. Dadurch ändert sich der Gesamtabstand h1+h2 zur aufzunehmenden Oberfläche 30, so dass darüber der Fokus eingestellt werden kann. Bevorzugt wird die Digitalkamera 3 mit einem Makro-Objektiv versehen.

Das Fenster 13 ist von Ausblasschlitzen 14 umgeben, aus denen Luft ausgeblasen wird, um das Fenster 13 von Verschmutzungen und Spritzern freizuhalten. Die Zufuhr der Luft kann über Luftkanäle in der Wandung des Systemgehäuses 10 erfolgen. Diese können besonders gut gefertigt werden, wenn das Systemgehäuse 10 in einem additiven Verfahren hergestellt wird, beispielsweise mit Fused-Deposition-Modeling (FDM).

Rund um das Fenster 13 ist zudem die LED-Blitzvorrichtung 6 angeordnet. Die LED-Blitzvorrichtung 6 kann alternativ auch hinter dem Fenster 13 oder neben dem Fenster 13 positioniert sein.

Die Blitzvorrichtung 6 beleuchtet die aufzunehmende Oberfläche nur sehr kurzzeitig. Bevorzugt liegt die Blitzdauer zwischen 1 und 10 Mikrosekunden. Damit wird es möglich trotz der üblicherweise längeren Belichtungszeit der Digitalkamera ein scharfes Bild aufzunehmen, auch wenn sich die Oberfläche schnell bewegt. Beispielsweise an einem Sieb oder Filz einer Papiermaschine, welche sich mit mehreren Hundert m/min oder über 1000 m/min bewegen. Dadurch wird die Auflösung gut genug, um selbst feine Siebfäden oder Strukturen mit einer Ausdehnung von 0,1 mm erkennbar zu machen. So können Beschädigungen, Verschmutzungen oder Verschleißerscheinungen an solchen Oberflächen bei laufender Maschine beurteilt werden. Die Maschinen müssen dafür nicht mehr abgestellt werden.

Zur Steuerung des Kamerasystems 1 ist die Steuerungseinheit 5 und zur Speicherung der aufgenommenen Bilder, sowie gegebenenfalls von Einstellparametern ist der Datenspeicher 17 vorhanden.

Für eine unabhängige Stromversorgung des Kamerasystems 1 ist der Energiespeicher 7 vorgesehen, der bevorzugt als passender Akku ausgeführt ist.

Alle diese Komponenten sind durch das geschlossene Systemgehäuse 10 vor Verschmutzung und Spritzwasser geschützt.

Die Laufrichtung 31 zeigt exemplarisch die Bewegungsrichtung der Oberfläche 30 an. Alternativ kann die Laufrichtung auch senkrecht zur eingezeichneten Laufrichtung ausgerichtet sein.

Um einen konstanten Abstand zwischen der Digitalkamera 2 und der aufzunehmenden Oberfläche 30 zu halten, ist es von Vorteil, wenn das Kamerasystem 1 mit der Oberfläche 30 dauernd in Kontakt ist, während Aufnahmen gemacht werden. So kann der Fokus über die Abstandsverstellung 3 sehr genau eingestellt und gehalten werden. Damit im Kontakt weder die Oberfläche 30 noch das Systemgehäuse 10 beschädigt werden, sind die Auflageelemente 16 als Verschleißteile vorgesehen. Diese können als skiförmige Bügel aus geeignetem Material ausgeführt werden, so dass die Auflageelemente 16 schneller verschleißen als die Oberfläche 30. Zudem können die Auflageelemente 16 hochgebogene Enden aufweisen, damit Beschädigungen an der Oberfläche 30 vermieden werden.

In einer vorteilhaften Weiterbildung können die Auflageelemente 16 auch eine Krümmung aufweisen, so dass das Kamerasystem 1 auf eine Walze aufgesetzt werden kann. Damit ist es dann möglich, auch die Oberfläche 30 eines Bandes, das auf einer Walze umgelenkt wird, aufzunehmen.

Um getriggerte Aufnahmen machen zu können, zum Beispiel von einem Nahtbereich eines umlaufenden Bandes, kann die Fotodiode 8 und die darum herum angeordnete Beleuchtungseinheit 9 vorgesehen sein. Das Licht der Beleuchtungseinheit 9 wird von der Oberfläche 30 reflektiert und von der Fotodiode 8 erfasst. Ändert sich die Reflektion, zum Beispiel durch eine Farbmarkierung auf der Oberfläche 30, erkennt das die Fotodiode 8 und es kann eine Aufnahme ausgelöst, das heißt gespeichert werden. Um eine Beeinflussung der Fotodiode 8 durch die LED-Blitzvorrichtung 6 zu vermeiden, ist die Abschirmung 15 vorhanden.

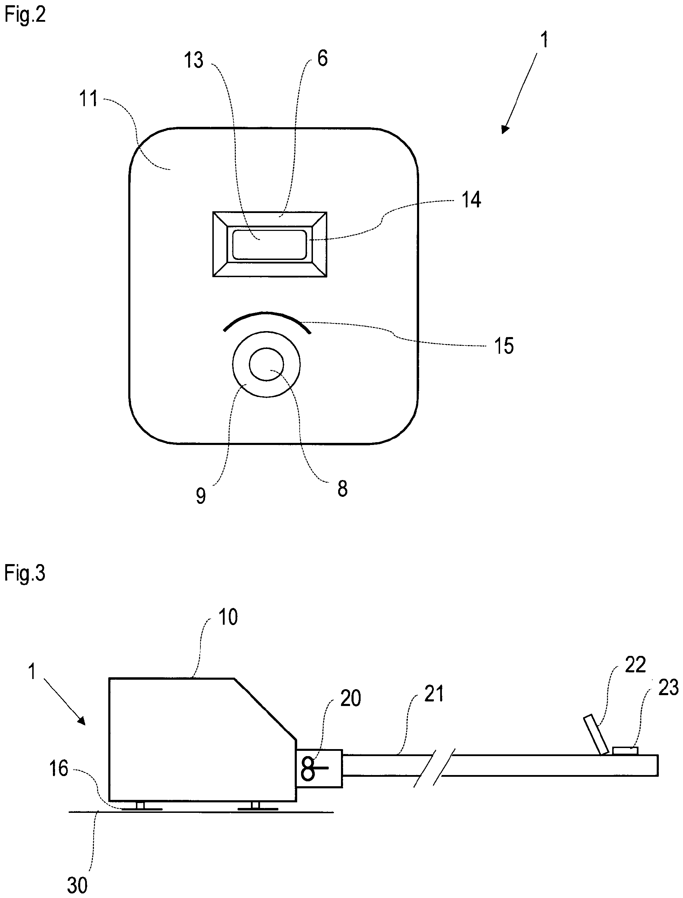

**Fig.2** zeigt das Kamerasystem von der Aufnahmeseite 11. Um das Fenster 13 sind die Ausblasschlitze 14 angeordnet und um diese herum die LED-Blitzvorrichtung 6. Alternativ kann die LED-Blitzvorrichtung 6 hinter dem Fenster 13 im Inneren des Systemgehäuses 10 angeordnet sein. Um die Fotodiode 8 ist die Beleuchtungseinheit 9 angeordnet. Und die Abschirmung 15 sorgt dafür, dass die Fotodiode 8 nicht von der LED-Blitzvorrichtung beeinflusst wird.

Die Beleuchtungseinheit 9 und die LED-Blitzvorrichtung 6 können auch anders angeordnet sein, zum Beispiel nur auf einer oder auf zwei Seiten der Fotodiode 8 beziehungsweise des Fensters 13. Wichtig ist, dass die LED-Blitzvorrichtung 6 die Oberfläche 30 gut und möglichst schattenfrei ausleuchtet, um gute Aufnahmen machen zu können, und dass die Beleuchtungseinheit 9 so angeordnet ist, dass die Fotodiode 8 das von der Oberfläche 30 reflektierte Licht erfasst.

Die Fotodiode kann in Laufrichtung betrachtet vor oder nach oder neben dem Fenster angeordnet sein.

Die **Fig.3** zeigt eine Ausführung des Kamerasystem 1 von der Seite. Mit der Haltestange 21 und dem Ventilator 20, der die Luft durch die Luftkanäle im Systemgehäuse 10 zu den Ausblasschlitzen 14 bläst. Ist die Haltestange 21 als Halterohr ausgebildet, kann der Ventilator 20 durch dieses die benötigte Luft ansaugen. So ist sichergestellt, dass keine staubige oder feuchte Luft aus der Maschine angesaugt wird.

Weiterhin sind das Display 22 und die Fernbedienungseinheit 2 schematisch dargestellt. Mit einem solchen, leichten und kompakten Kamerasystem 1 kann der Bediener einfach und komfortabel zuverlässig scharfe Aufnahmen von einer schnell bewegten Oberfläche machen. Er bringt das Kamerasystem 1 mit der Oberfläche 30 in Kontakt, indem er die Auflageelemente 16 auf der Oberfläche abstellt. Durch die Sieb- oder Bandspannung wird das geringe Gewicht des Kamerasystems problemlos gehalten. Wird nun die LED-Blitzvorrichtung 6 aktiviert, so dass sie in regelmäßigen Abständen einen kurzen Blitz erzeugt, so kann der Bediener auf dem Display 22 beobachten, welches Bild von der Digitalkamera 2 gerade erfasst wird. Über die Fernbedienungseinheit 23 kann er die nötigen Einstellungen vornehmen und beispielsweise den Fokus über die Abstandsverstellung 3 einstellen. Entspricht das gezeigte Bild im Display dem, was er aufnehmen möchte, kann er manuell eine Aufnahme oder eine Serienaufnahme auslösen und somit die Aufnahmen speichern. Die Fernbedienungseinheit 23 ist über eine drahtlose Verbindung insbesondere über eine NIR- oder WLAN-Verbindung mit der Steuerungseinheit 5 verbunden.

Alternativ können die Aufnahmen auch wie zu vor beschrieben von der Fotodiode, getriggert durch eine Farbmarkierung oder ähnliches, ausgelöst werden.

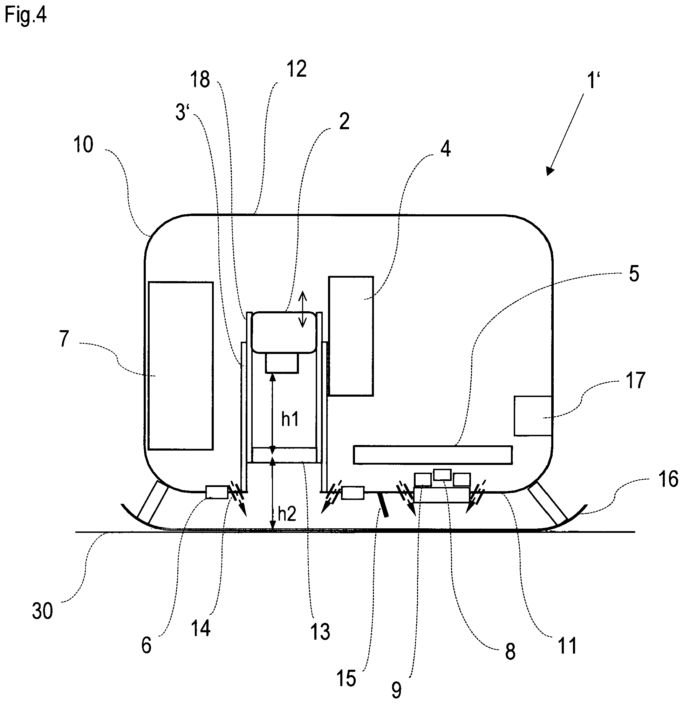

In **Fig.4** ist eine weitere Ausführung des erfindungsgemäßen Kamerasystems 1' dargestellt. Sie unterscheidet sich von der Ausführung nach Fig.1 dadurch, dass die Digitalkamera 2 zusammen mit dem Fenster 13 an der Kamera-Halterung 18 befestigt ist. Die Kamera-Halterung 18 ist mit der Abstandsverstellung 3' verbunden, welche den Abstand zwischen der Digitalkamera 2 und der Oberfläche 30 stufenlos verändern kann, um den Fokus einzustellen. Der Abstand h1 ist fest. Der Abstand h2 wird verändert. Das Fenster 13 wird dabei relativ zum Systemgehäuse 10 verschoben.

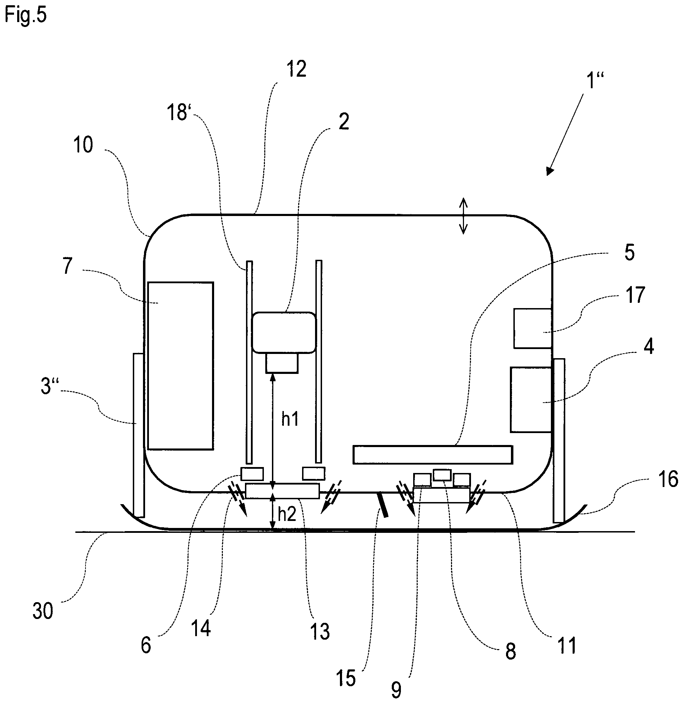

**Fig.5** zeigt noch eine weitere Ausführung des erfindungsgemäßen Kamerasystems 1". Hier ist die Digitalkamera 2 über die Kamera-Halterung 18' mit dem Systemgehäuse 10 fest verbunden. Auch hier ist der Abstand h1 fest. Die Abstandsverstellung 3" verändert den Abstand zwischen dem Systemgehäuse 10, an dem das Fenster 13 befestigt ist, und der Oberfläche 30, um den Fokus einzustellen. In der gezeigten Ausführung wird dazu der Abstand zwischen den Auflageelementen 16 und dem Systemgehäuse 10 stufenlos verändert.

In allen Varianten ist gewährleitstet, dass der Abstand zwischen der Digitalkamera 2 und der Oberfläche 30 stufenlos verändert und dann während der Aufnahmen stabil gehalten werden kann. So kann der Fokus gut und einfach eingestellt werden und bleibt dann konstant während der Aufnahmen.

### Bezugszeichen

- 1,1',1": Kamerasystem
- 2: Digitalkamera
- 3,3',3": Abstandsverstellung
- 4: Motor
- 5: Steuerungseinheit
- 6: LED-Blitzvorrichtung
- 7: Energiespeicher
- 8: Fotodiode
- 9: Beleuchtungseinheit
- 10: Systemgehäuse
- 11: Aufnahmeseite
- 12: Rückseite
- 13: Fenster
- 14: Ausblasschlitze
- 15: Abschirmung
- 16: Auflageelemente
- 17: Datenspeicher
- 18,18': Kamera-Halterung
- 20: Ventilator
- 21: Haltestange
- 22: Display
- 23: Fernbedienungseinheit
- 30: Oberfläche
- 31: Laufrichtung

- h1: Abstand Kamera zur Fensterebene
- h2: Abstand Fensterebene zur Oberfläche

## Patentansprüche

1. Kamerasystem (1,1',1") zur Aufnahme von Bildern einer schnell bewegten Oberfläche (30) einer laufenden Materialbahn, insbesondere eines Siebbandes, Filzbandes, Kunststoffbandes, Metallbandes oder einer Textilbahn,
umfassend eine Digitalkamera (2), eine Abstandsverstellung (3,3',3") mit Motor (4), eine Steuerungseinheit (5), eine LED-Blitzvorrichtung (6) und ein geschlossenes Systemgehäuse (10), welches zumindest die Digitalkamera (2) und die Steuerungseinheit (5) umschließt, und welches eine Aufnahmeseite (11) mit einem Fenster (13) aufweist, wobei die LED-Blitzvorrichtung (6) an der Aufnahmeseite (11) seitlich neben dem Fenster (13), hinter dem Fenster (13) oder um das Fenster (13) herum angeordnet ist, so dass die LED-Blitzvorrichtung (6) die aufzunehmende Oberfläche (30) beleuchten kann,
wobei die Digitalkamera (2) im Systemgehäuse derart ausgerichtet ist, dass sie Aufnahmen durch das Fenster (13) hindurch machen kann, und wobei die Digitalkamera (2) derart an der Abstandsverstellung (3,3',3") befestigt ist, dass der Abstand der Digitalkamera (2) zur Oberfläche (30) stufenlos verändert werden kann, um den Fokus einzustellen.

2. Kamerasystem (1,1',1") nach Anspruch 1
**dadurch gekennzeichnet,**
**dass** die Abstandsverstellung (3,3',3") im Systemgehäuse (10) angeordnet ist.

3. Kamerasystem (1,1',1") nach Anspruch 1 oder 2
**dadurch gekennzeichnet,**
**dass** mit Hilfe der Abstandsverstellung (3,3',3") der Abstand der Digitalkamera (2) zum Fenster (13) stufenlos verändert werden kann, um den Fokus einzustellen.

4. Kamerasystem (1,1',1") nach einem der vorherigen Ansprüche
**dadurch gekennzeichnet,**
**dass** mit Hilfe der Abstandsverstellung (3,3',3") die Digitalkamera (2) zusammen mit dem Fenster (13) verschoben werden kann und so der Abstand der Digitalkamera (2) zur Oberfläche (30) stufenlos verändert werden kann.

5. Kamerasystem (1,1',1") nach einem der vorherigen Ansprüche
**dadurch gekennzeichnet,**
**dass** mit Hilfe der Abstandsverstellung (3,3',3") das Systemgehäuse (10) relativ zur Oberfläche (30) verschoben werden kann und so der Abstand der Digitalkamera (2) zur Oberfläche (30) stufenlos verändert werden kann.

6. Kamerasystem (1,1',1") nach einem der vorherigen Ansprüche **dadurch gekennzeichnet,**
**dass** das Kamerasystem (1,1',1") so ausgebildet und dazu vorgesehen ist, dass es während der Aufnahmen dauernd in Kontakt mit der schnell bewegten Oberfläche (30) ist, indem an der Aufnahmeseite (11) Auflageelemente (16) vorgesehen sind, welche während der Aufnahme im Kontakt mit der schnell bewegten Oberfläche (30) stehen.

7. Kamerasystem (1,1',1") nach Anspruch 5 und 6
**dadurch gekennzeichnet,**
**dass** die Abstandsverstellung (3,3',3") so ausgeführt ist, dass sie den Abstand zwischen dem Systemgehäuse (10) und den Auflageelementen (16) stufenlos verändern kann.

8. Kamerasystem (1,1',1") nach einem der vorherigen Ansprüche
**dadurch gekennzeichnet,**
**dass** um das Fenster (13) herum einer oder mehrere Ausblasschlitze (14) vorhanden sind und dass ein Ventilator (20) vorhanden ist, der so angeordnet und mit den Ausblasschlitzen (14) verbunden ist, dass er Luft zu diesen Ausblasschlitzen (14) fördern kann, insbesondere dass im Systemgehäuse (10) Luftkanäle vorhanden sind, die den Ventilator mit den Ausblasschlitzen verbinden.

9. Kamerasystem (1,1',1") nach einem der vorherigen Ansprüche
**dadurch gekennzeichnet,**
**dass** die LED-Blitzvorrichtung (6) so ausgebildet ist, dass sie Blitze erzeugen kann, deren Beleuchtungszeit zwischen 0,5 und 20 Mikrosekunden, insbesondere zwischen 1 und 10 Mikrosekunden liegt.

10. Kamerasystem (1,1',1") nach einem der vorherigen Ansprüche
**dadurch gekennzeichnet,**
**dass** an der Aufnahmeseite (11) eine Fotodiode (8) und eine Beleuchtungseinheit (9) neben der Fotodiode (8) oder um die Fotodiode (8) herum vorhanden ist und dass eine Abschirmung (15) zwischen der Fotodiode (8) und der LED-Blitzvorrichtung (6) vorgesehen ist, wobei die Fotodiode (8) so verschaltet ist, dass sie als Trigger eine Bildaufnahme auslösen kann.

11. Kamerasystem (1,1',1") nach einem der vorherigen Ansprüche
**dadurch gekennzeichnet,**
**dass** ein Energiespeicher (7) zur unabhängigen Versorgung des Kamerasystems (1,1',1") vorhanden ist, insbesondere ein Akku oder eine Batterie, und insbesondere dass der Energiespeicher (7) im Systemgehäuse (10) angeordnet ist.

12. Kamerasystem (1,1',1") nach einem der vorherigen Ansprüche
**dadurch gekennzeichnet,**
**dass** eine Haltestange (21), insbesondere als Halterohr und/oder mehrteilig aufgebaut, mit einer Länge von mindestens 1 m, bevorzugt von mindestens 1,5 m am Systemgehäuse (10) befestigt ist, so dass die Digitalkamera (2) über eine laufende Materialbahn gehalten werden kann.

13. Kamerasystem (1,1',1") nach einem der vorherigen Ansprüche
**dadurch gekennzeichnet,**
**dass** eine Fernbedienungseinheit (23) vorhanden ist, mit der Funktionen des Kamerasystems (1,1`,1") über die Steuereinheit (5) angesteuert werden können, wobei eine oder mehrere der folgenden Komponenten ansteuerbar sind:
die Digitalkamera (2), für beispielsweise manuelle Auslösung, Serienaufnahme, Bildhelligkeit, Empfindlichkeit,
die Abstandsverstellung (3,3',3"), um den Fokus einzustellen,
die LED-Blitzvorrichtung (6), um beispielsweise Blitzdauer, Blitzabfolge zu beeinflussen,
der Ventilator (20), zum Anschalten, Ausschalten, Drehzahl verändern die Fotodiode (8) beziehungsweise die Steuerungseinheit (5), um den Trigger-Level zu verändern,
wobei die Fernbedienungseinheit (23) bevorzugt über eine drahtlose Verbindung, insbesondere über eine NIR- oder WLAN-Verbindung mit der Steuerungseinheit (5) verbunden ist.

14. Kamerasystem (1,1',1") nach einem der vorherigen Ansprüche
**dadurch gekennzeichnet,**
**dass** ein Display (22) , insbesondere als Touch-Display ausgeführt, vorhanden ist, auf dem das Bild der Digitalkamera (2) direkt angezeigt werden kann, und welches bevorzugt separat vom Systemgehäuse (10) angeordnet ist.

15. Kamerasystem (1,1',1") nach Anspruch 10, 11 und 12
**dadurch gekennzeichnet,**
**dass** das Display (22) und die Fernbedienungseinheit (23) an dem Ende der Haltestange (21) angeordnet sind, die dem Systemgehäuse (10) gegenüber liegt, insbesondere sind Display (22) und Fernbedienungseinheit (23) als eine Einheit ausgeführt.
